Europäisches Patentamt

European Patent Office

Office européen des brevets

(19)

(11) Publication number: **0 203 982 B1**

# EUROPEAN PATENT SPECIFICATION

(12)

(45) Date of publication of patent specification: **11.03.92**    (51) Int. Cl.⁵: **C25B 11/06**

(21) Application number: **86900127.1**

(22) Date of filing: **13.12.85**

(86) International application number:
**PCT/EP85/00704**

(87) International publication number:
**WO 86/03790 (03.07.86 86/14)**

Divisional application 90115243.9 filed on
13/12/85.

(54) **METHOD FOR PREPARING AN ELECTRODE AND USE THEREOF IN ELECTROCHEMICAL PROCESSES.**

(30) Priority: **14.12.84 IT 2406784**
    **17.10.85 IT 2252985**

(43) Date of publication of application:
**10.12.86 Bulletin 86/50**

(45) Publication of the grant of the patent:
**11.03.92 Bulletin 92/11**

(84) Designated Contracting States:
**BE DE FR GB NL SE**

(56) References cited:
**EP-A-01 292 31**
**DE-A-31 322 69**
**US-A- 4 414 064**
**US-A-41 055 31**

**Patent Abstracts of Japan, vol. 8, no. 114
(C-225) (1551), 26 May 1984 & JP, A, 5925987
(ASAHI GLASS) 10 Febr. 1984, see the whole
abstract**

See also references of WO8603790

(73) Proprietor: **DE NORA PERMELEC S.P.A.**
**Via Bistolfi 35**
**I-20 134 Milano(IT)**

(72) Inventor: **NIDOLA, Antonio**
**Via Farneti, 5**
**I-Milan(IT)**

(74) Representative: **Kinzebach, Werner, Dr. et al
Patentanwälte Reitstötter, Kinzebach und
Partner Sternwartstrasse 4 Postfach 86 06 49
W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for preparing electrodes for use in electrochemical processes, in particular for use in ion exchange membrane or permeable diaphragm cells for the electrolysis of alkali metal halides and more particularly as cathodes for hydrogen evolution in the presence of alkali metal hydroxide solutions.

Further, the present invention relates to the electrodes which are obtainable by the above method.

The main requisites for industrial cathodes are a low hydrogen overvoltage, which results in a reduction of energy consumption, is well as a suitable mechanical stability under the stresses which may occur during assembly or due to the turbulence of the liquids during operation.

Cathodes which fulfil the above requirements are constituted by a support of a suitable conductive material, such is iron, steel, stainless steel, nickel and alloys thereof, copper and alloys thereof, whereto in electrocatalytic conductive coating is applied.

Said electrocatalytic conductive coating may be applied, among various methods, by galvanic or electroless deposition of metal or metal alloys, which are electroconductive, but only partially electrocatalytic per se, such as nickel or alloys thereof, copper or alloys thereof, silver or alloys thereof, containing metals of the platinum group exhibiting low hydrogen overvoltages, those metals being present in the coating as a homogeneous phase, most probably as a solid solution.

As an alternative, the electrocatalytic coating may be obtained by galvanic or electroless deposition of an electrically conductive metal, only partially electrocatalytic per se, such as nickel, copper, silver and alloys thereof as aforementioned, which contains dispersed therein particles of an electrocatalytic material exhibiting a low overvoltage to hydrogen evolution. The electrocatalytic particles may consist of elements belonging to the group comprising : titanium zirconium, niobium, hafnium, tantalum, metals of the platinum group, nickel, cobalt, tin, manganese, as metals or alloys thereof, oxides thereof, mixed oxides, borides, nitrides, carbides, sulphides, and are added and held in suspension in the plating baths utilized for the deposition.

Examples of electrodes having a coating containing dispersed electrocatalytic particles are illustrated in Belgian Patent No. 846,458, corresponding to Italian patent application No. 29506 A/76, and in U.S. Patent No. 4,465,580 which are incorporated herein by reference.

A particularly serious drawback connected to the use of the aforementioned electrodes, when used as cathodes in diaphragm or ion exchange membrane cells for alkali halides electrolysis, is constituted by the progressive poisoning of the catalytic surface caused by metal ions contained in the electrolyte, with the consequent gradual increase of the hydrogen overvoltage. The process efficiency results therefore negatively affected, which represents a particularly critical problem involving the necessity of periodical substitution of the cathodes.

Metal impurities which are normally responsible for the poisoning comprise Fe, Co, Ni, Pb, Hg, Sn, Sb or the like.

In the specific case of brine electrolysis in membrane cells, the metal impurities are more frequently represented by iron and mercury.

Iron impurities may have two origins :
- a chemical one, from the anolyte, when the raw salt contains potassium ferrocyanide, added as anti-caking agent.
- an electrochemical one, due to corrosion of the steel structures of the cathodic compartment and accessories thereof.

Mercury is found in the brine circuit after conversion of mercury cells to membrane cells.

As soon as these impurities, which are usually present in solution under a complex form, diffuse to the cathode surface, they are readily electroprecipitated to the metal state, so that a poorly electrocatalytic layer is built up in a relatively short time.

This catalytic aging, which depends on various factors such as the type of cathodic material (composition and structure), working conditions (temperature, catholyte concentration) and the nature of the impurity, results remarkable and irreversible soon after a short time of operation even in the presence of impurities concentrations of some parts per million.

DE-A- 31 32 269 discloses a cathode for the generation of hydrogen which comprises an electroconductive substrate and an electrocatalytic coating which contains fine, carbon containing particles. The cathode is prepared by galvanically depositing the electrocatalytic coating on the electroconductive support from a galvanic nickel plating bath containing said carbon containing particles. In addition, the plating bath may contain 5,000 ppm or less of one or more metals, preferably in the form of a salt, selected from the group consisting of copper, chromium, aluminium, tin, zinc, barium, silver, platinum, rhodium, iridium and palladium. Due to the carbon containing particles, these cathodes exhibit a low hydrogen overvoltage.

JP-A-59-25 987 discloses a cathode with low overvoltage which are prepared by imersing an electrode substrate so as to deposit an electrocatalytic coating. The plating bath contains a metal selected from silver and platinum group metals, an alloy or oxide thereof and electrically conductive particles, selected from Raney nickel, Raney cobalt or Raney silver.

EP-A-129 231 which is a prior art document in the sense of Article 54 (3) EPC discloses a low hydrogen overvoltage cathode. This cathode has an electrocatalytic coating layer which consists of nickel or a nickel alloy containing electroconductive fine particles of a platinum group metal or an oxide thereof.

In consideration of these substantial practical drawbacks, the inventor carefully studied the behaviour of many cathodes having electrocatalytic coatings with different compositions and surprisingly found that by adding certain compounds to the galvanic deposition baths, mentioned above and described in the technical and patent literature, electrodes are obtained which exhibit low hydrogen overvoltages which remain stable, or nearly stable, for extended periods of time also in the presence of impurities contained in the electrolysis solutions. In particular, it has been found that the electrocatalytic coating of the electrodes of the present invention renders them practically immune to poisoning by iron and mercury, by introducing additives in the galvanic bath utilized for preparing these coatings, as recited in of claim 1 in a concentration range of 100 to 2,000 ppm. In the following description and in the examples, coatings obtained as described above will be identified as doped coatings; the elements, which promote the resistance of the coatings to poisoning, will be referred to as doping elements.

The present invention relates to a method for galvanically preparing an electrode for electrochemical processes, said electrode being of the type consisting of:

a) an electroconductive support and

b) an electrocatalytic coating of a metal or metal alloy with particles of an electrocatalytic material dispersed therein, said electrocatalytic material being selected from at least one element belonging to the platinum group, as metals or alloys thereof or oxides, mixed oxides, borides, nitrides, carbides, sulphides therof,

said method consisting in applying said electrocatalytic coating by galvanic deposition onto said electroconductive support from a galvanic nickel, copper or silver plating bath containing suspended particles of said electrocatalytic materials, the galvanic plating bath further containing in dissolved or suspended form 100 to 2 000 ppm of at least one additional compound of thallium, lead, tin, arsenic, antimony, bismuth, cadmium or sulfur.

The compounds of the above-mentioned elements for example may be oxides, sulfides, sulfates, thiosulfates, halides (especially chlorides), oxyhalides (especially oxychlorides), metal (especially alcali metal) salts of oxo acids, nitrates, mixed salts and complex salts.

For example, said compound may be selected from the group consisting of $TlCl$, $Pb(NO_3)_2$, $SnCl_2$, $As_2O_3$, $Sb_2O_3$, $Bi_2O_3$, $CdCl_2$, $Na_2S_2O_3$, $Na_2S$, $Cd(NO_3)_2$, $Bi(NO_3)_3$.

Deposition of the electrocatalytic coating onto the support is carried out according to conventional techniques well-known to a person skilled in galvanotechnics. For example, the galvanic nickel-plating bath may be a Watt bath (nickel chloride and sulphate in the presence of boric acid or other buffering agent), a stabilized or un-stabilized sulphamate bath, a Weisberg bath, a nickel chloride bath, a nickel chloride and acetate bath and the like : according to the teachings of the aforementioned patents suitable quantities of particles of an electrocatalytic material previously selected ore held in suspension by stirring and, if necessary, by adding surfactants. As a typical example, the metal support is constituted by an expanded nickel sheet or fabric, and the electrocatalytic material, the particles of which are held in suspension, is ruthenium dioxide.

Obviously, in case the coating is based on copper, silver, alloys thereof or other metals or alloys, instead of nickel, galvanic or electroless baths based on said metals will be utilized.

The thickness of the electrocatalytic coating, the quantity and the size of the electrocatalytic particles dispersed in the coating are not critical per se, but are substantially defined on practical and economical basis : usually the coating thickness is comprised between 1 and 50 $\mu$m, the dispersed particles have an equivalent diameter of 0.01 to 150 $\mu$m and their quantity may vary between 1 and 50% by weight.

The present invention, with respect to the above mentioned process and to the teachings of the previously illustrated patent literature (Belgian Patent No. 848,458, U.S. Patent No. 4,465,580) is represented by the addition of suitable quantities of compounds of at least one of the afore-mentioned doping elements to the galvanic deposition bath, described above. By this addition the coating is found to contain varying quantities of doping elements: as illustrated in some of the following Examples, the concentration of doping elements may vary within ample limits depending on the conditions of deposition, particularly the current density, temperature, bath pH, at the same concentration of compounds of the doping elements in the deposition bath. However, the resistence to poisoning of the electrodes thus prepared, when operating as cathodes, appears to be completely independent from the variation of the concentration of the doping elements in the coating.

As regards the hindering action against poisoning and the chemical nature itself of the doping elements added to the coating (elemental state vs. oxidation state different from zero in finely divided dispersions of said compounds), a complete explanation is still difficult to state. It may be assumed that less noble doping elements, such as Cd, are present as hydrated oxides or as basic salts, causing a sharp modification of the wettability and adhesion characteristics between the coating surface and the mercury droplets and iron microcrystals which are formed during operation of the electrode as cathode in polluted alkali solutions. In fact, due to the presence, from the beginning, of metals of the platinum group or of electrocatalytic particles in the growing coating, the deposition potential is not sufficiently cathodic to allow for the discharge of the doping element to the metal state.

Therefore, the coatings according to the present invention are substantially different from the conventional coatings illustrated in the prior art wherein, for example, zinc is present in large amounts as a metal and is subject to leaching in order to provide for a higher porosity and increased active surface.

As regards nobler doping elements, the addition of smaller quantities is sufficient to quite efficiently inhibit poisoning by iron and mercury.

These controlled additions constitute the present invention. In fact, electrocatalytic coatings containing high quantities of metals of the platinum group, or, as a limit case, exclusively consisting of said elements, are readily deactivated when utilized as cathodes in polluted alkali solutions (as regards Ru and Pt refer to D.E. Grove, Platinun Metals Rev. 1985, 29(3), 98-106).

The electrodes of the invention may be used in an electrolytic cell for the electrolysis of alcali metal halides, wherein gas- and liquid-permeable anodes and cathodes are separated by a permeable diaphragm or an ion-exchange membrane, which membrane is substantially impermeable to electrolyte flow, said cell having as the catholyte an alkali metal hydroxide solution, even polluted by iron and/or mercury.

The most meaningful examples are reported in the following part of the description to further illustrate the invention, which however is not intended to be limited thereto. For example, in the following examples the coating is formed by galvanic deposition but it is evident to a person skilled in the art that electroless deposition may be resorted to as well.

EXAMPLE 1

Various 25 mesh samples made of nickel wire having a diameter of 0.1 mm were steam degreased and rinsed in a 15 % nitric acid solution for about 60 seconds. Utilizing the nickel samples is substrates, electrodeposition was carried out from a plating bath having the following composition :

| | |
|---|---|
| - nickel sulphate | 210 g/l |
| - nickel chloride | 60 g/l |
| - boric acid | 30 g/l |
| - ruthenium oxide po | 4 g/l (as a metal) |
| - additives (types and concentration, see Table I) | |

The bath temperature was about 50°C, and the current density 100 A/square meter. The both contained ruthenium oxide particles having an average diameter of the particles of about 2 $\mu$m, with a minimum diameter of 0.5 $\mu$m and a maximum diameter of 5 micrometers.

The powder was held in suspension by mechanical stirring and electrodeposition was carried out for about 2 hours.

The thickness of the deposited coating was about 25 $\mu$m and about 10 percent of the coating volume was constituted by ruthenium oxide particles uniformly dispersed in the nickel matrix. Oxide particles only partially covered by nickel, whose surface appeared dendritic, were found onto the surface of the coating.

The potentials of the cathodes thus obtained were then measured as a function of time, it 90°C and at 3 kA/square meter, in alkali solutions of 33 percent NaOH polluted respectively by 50 ppm of iron and 10 ppm of mercury. The detected values were then compared with those characteristic of a cathode prepared from a bath without immunizing additives.

The results, reported in Table 1, outline the substantial effect of catalytic aging caused in particular by the action of mercury on the undoped cathode: the catalytic aging is substantially eliminated or remarkably reduced for the cathodes prepared with nickel-plating bath whereto the aforementioned compounds of the

4

doping elements were added.

In this example, as well as in the following examples, the concentrations of the various additives in the plating bath, and of iron and mercury in the 33% NaOH solutions are reported as ppm (parts per million, which correspond more or less to milligrams per liter) of the various additives, expressed as elements. Thus, 100 ppm of TlCl (thallous chloride) are to indicate that the plating bath contains 117 ppm (about 117 milligrams per liter) of salt, corresponding to 100 ppm (about 100 milligrams per liter) of metal.

TABLE 1 : Cathode Potentials vs. operating time

| Coating | Additive to bath | | | Cathode Potential mV (NHE) | | | Impurity in 33% NaOH | |
|---|---|---|---|---|---|---|---|---|
| | Element | Salt or Oxide | ppm | Initial | 1 day | 10 days | Element | ppm |
| Ni+RuO$_2$ | - | - | - | 1050 | 1050 | 1050 | - | - |
| Ni+RuO$_2$ | - | - | - | 1040 | 1060 | 1070 | Fe | 50 |
| Ni+RuO$_2$ | - | - | - | 1050 | 1150 | 1750 | Hg | 10 |
| Ni+RuO$_2$ | Tl | TlCl | 100 | 1050 | 1050 | 1050 | Fe | 50 |
| Ni+RuO$_2$ | Pb | Pb(NO$_3$)$_2$ | 100 | 1050 | 1050 | 1050 | Fe | 50 |
| Ni+RuO$_2$ | Sn | SnCl$_2$ | 100 | 1050 | 1050 | 1050 | Fe | 50 |
| Ni+RuO$_2$ | As | As$_2$O$_3$ | 100 | 1050 | 1050 | 1050 | Fe | 50 |
| Ni+RuO$_2$ | Sb | Sb$_2$O$_3$ | 100 | 1050 | 1050 | 1050 | Fe | 50 |
| Ni+RuO$_2$ | Bi | Bi$_2$O$_3$ | 100 | 1050 | 1050 | 1050 | Fe | 50 |
| Ni+RuO$_2$ | Tl | TlCl$_2$ | 100 | 1050 | 1050 | 1100 | Hg | 10 |
| Ni+RuO$_2$ | Pb | Pb(NO$_3$)$_2$ | 100 | 1040 | 1040 | 1080 | Hg | 10 |
| Ni+RuO$_2$ | Sn | SnCl$_2$ | 100 | 1040 | 1040 | 1090 | Hg | 10 |
| Ni+RuO$_2$ | As | As$_2$O$_3$ | 100 | 1040 | 1050 | 1090 | Hg | 10 |
| Ni+RuO$_2$ | Sb | Sb$_2$O$_3$ | 100 | 1040 | 1060 | 1120 | Hg | 10 |
| Ni+RuO$_2$ | Bi | Bi$_2$O$_3$ | 100 | 1040 | 1070 | 1130 | Hg | 10 |

Tests on the coating were carried out for a limited number of samples (destructive tests such as complete solubilization followed by colorimetric determination or by atomic absorption or non-destructive tests such as X-rays diffraction).

In those cases where the doping effect was due to lead addition, the coating was found to contain 100 to 1000 ppm of this element, depending on the stirring intensity, the other conditions being the same.

Similarly, the coatings doped by tin were found to contain small quantities of this element, in the range of 100 to 300 ppm. Higher contents were detected with a higher deposition temperature, for example 70°C instead of 50°.

EXAMPLE 2

Nickel fabric samples made of a wire having a diameter of 0.1 mm, after suitable electrolytic pickling, were activated, as illustrated in Example 1, by an electrocatalytic coating utilizing a nickel plating Watt bath containing suspended particles of ruthenium oxide and additives as per Table 4.

Then, the samples were tested as cathodes at 90°C, 3 KA/m2 in 33% NaOH solutions either unpoisoned or poisoned by iron (50 ppm) and mercury (10 ppm) and the relevant cathodic potentials versus time of electrolysis are collected in Table 2.

TABLE 2 : Cathode Potentials vs. operating time

| Coating | Additive to bath | | | Cathode Potential mV (NHE) | | | Impurity in 33% NaOH | |
|---|---|---|---|---|---|---|---|---|
| | Element | Salt | ppm | Initial | 30 minutes | 60 minutes | Element | ppm |
| Ni+RuO$_2$ | - | - | - | 1000 | 1000 | 1000 | - | - |
| Ni+RuO$_2$ | - | - | - | 1000 | 1080 | 1116 | Fe | 50 |
| Ni+RuO$_2$ | - | - | - | 1000 | 1800 | - | Hg | 10 |
| Ni+RuO$_2$ | Cd | CdCl$_2$ | 100 | 980 | 980 | 980 | - | - |
| Ni+RuO$_2$ | Cd | CdCl$_2$ | 100 | 980 | 1080 | 1090 | Hg | 10 |

EXAMPLE 3

Samples of nickel fabric were activated as illustrated in Example 1, the only difference being represented by the addition of various amounts of sodium thiosulphate as the doping additive.

The relevant data (added ppm, cathode potentials) are shown in Table 3.

6

**TABLE 3 : Cathode Potentials vs. operating time**

| Coating | Additive to bath | | | Cathode Potential mV (NHE) | | | Impurity in 33% NaOH | |
|---|---|---|---|---|---|---|---|---|
| | | | | Initial | 30 minutes | 60 minutes | | |
| Element | Element | Salt | ppm | | | | Element | ppm |
| Ni+RuO$_2$ | - | - | - | 940 | 980 | 980 | - | - |
| Ni+RuO$_2$ | - | - | - | 1000 | 1090 | 1150 | Fe | 50 |
| Ni+RuO$_2$ | - | - | - | 980 | 2000 | - | Hg | 10 |
| Ni+RuO$_2$ | S | Na$_2$S$_2$O$_3$ | 100 | 990 | 1000 | 1020 | Fe | 50 |
| Ni+RuO$_2$ | S | Na$_2$S$_2$O$_3$ | 500 | 960 | 960 | 960 | Fe | 50 |
| Ni+RuO$_2$ | S | Na$_2$S$_2$O$_3$ | 100 | 950 | 1100 | 1580 | Hg | 10 |
| Ni+RuO$_2$ | S | Na$_2$S$_2$O$_3$ | 500 | 940 | 1050 | 1200 | Hg | 10 |
| Ni+RuO$_2$ | S | Na$_2$S$_2$O$_3$ | 1000 | 980 | 1030 | 1180 | Hg | 10 |
| Ni+RuO$_2$ | S | Na$_2$S$_2$O$_3$ | 500 | 940 | 940 | 940 | - | - |

EXAMPLE 4

Nickel fabric samples made of a wire having a diameter of 0.1 mm, after suitable electrolytic pickling, were activated, as illustrated in Example 1, by a nickel plating Watt bath containing suspended particles of ruthenium oxide and dissolved compounds of more than one doping element according to the present invention, as listed in Table 4 which shows also the values relating to the electrolysis carried out at 90°C , 3 kA/square meter in 33% NaOH solutions poisoned respectively by iron (50 ppm) and mercury (10 ppm).

TABLE 4 : Cathode potentials vs. operating time

| Coating | Additive to bath | | | Cathode Potential mV (NHE) | | | Impurity in 33% NaOH | |
|---|---|---|---|---|---|---|---|---|
| | Element | Salt or Oxide | ppm | Initial | 1 day | 10 days | Element | ppm |
| Ni+RuO$_2$ | - | - | - | 1050 | 1050 | 1050 | - | - |
| Ni+RuO$_2$ | - | - | - | 1040 | 1060 | 1070 | Fe | 50 |
| Ni+RuO$_2$ | - | - | - | 1050 | 1150 | 1750 | Hg | 10 |
| Ni+RuO$_2$ | Sb+S | Sb$_2$O$_3$ | 100 | 1040 | 1050 | 1040 | Fe | 50 |
| | | Na$_2$S | 100 | | | | | |
| Ni+RuO$_2$ | Cd+Mo | Cd(NO$_3$)$_2$ | 100 | 1040 | 1040 | 1040 | Fe | 50 |
| | | MoO$_3$ | 100 | | | | | |
| Ni+RuO$_2$ | Sb+S | Sb$_2$O$_3$ | 100 | 1040 | 1050 | 1100 | Hg | 10 |
| | | Na$_2$S | 100 | | | | | |
| Ni+RuO$_2$ | Bi+Se | Bi(NO$_3$)$_3$ | 100 | 1040 | 1060 | 1100 | Hg | 10 |
| | | SeO$_2$ | 100 | | | | | |

## Claims

1. A method for galvanically preparing an electrode for electrochemical processes, said electrode being of the type consisting of:
   a) an electroconductive support and
   b) an electrocatalytic coating of a metal or metal alloy with particles of an electrocatalytic material dispersed therein, said electrocatalytic material being selected from at least one element belonging to the platinum group, as metals or alloys thereof or oxides, mixed oxides, borides, nitrides, carbides, sulphides therof,
   said method consisting in applying said electrocatalytic coating by galvanic deposition onto sold electroconductive support from a galvanic nickel, copper or silver plating bath containing suspended

8

particles of said electrocatalytic materials, the galvanic plating bath further containing in dissolved or suspended form 100 to 2 000 ppm of at least one additional compound of thallium, lead, tin, arsenic, antimony, bismuth, cadmium or sulfur.

2. The method of claim 1, characterized in that the electrocatalytic material is ruthenium oxide.

3. An electrode for use in electrochemical processes obtainable according to the method of anyone of the preceding claims.

4. Use of the electrode according to claim 3 as a cathode in an electrolytic cell for the electrolysis of alkali metal halides.

**Revendications**

1. Un procédé pour préparer de façon galvanique une électrode pour des procédés électrochimiques, ladite électrode étant du type comprenant:
   a) un support électroconducteur et
   b) un revêtement électrocatalytique d'un métal ou d'un alliage métallique avec des particules d'un matériau électrocatalytique dispersées dedans, ledit matériau électrocatalytique étant choisi parmi au moins un élément appartenant au groupe du platine, en tant que métaux ou leurs alliages ou leurs oxydes, leurs oxydes mixtes , leurs borures, leurs nitrures, leurs carbures, leurs sulfures,
   ledit procédé consistant en l'application dudit revêtement électrocatalytique par dépôt galvanique sur ledit support électroconducteur d'un bain de revêtement galvanique de nickel, de cuivre, ou d'argent contenant des particules en suspension desdits matériaux électrocatalytiques, le bain de revêtement galvanique comprenant de plus, sous forme dissoute ou en suspension, 100 à 2 000 ppm d'au moins un composé supplémentaire de thallium, de plomb, d'étain, d'arsenic, d'antimoine, de bismuth, de cadmium ou de soufre.

2. Le procédé de la revendication 1, caractérisé en ce que le matériau électrocatalytique est l'oxyde de ruthénium.

3. Une électrode, pour utilisation dans des procédés électrochimiques, pouvant être obtenue selon le procédé de l'une quelconque des revendications précédentes.

4. L'utilisation de l'électrode selon la revendication 3 en tant que cathode dans une cellule électrolytique pour l'électrolyse des halogénures de métaux alcalins.

**Patentansprüche**

1. Verfahren zur galvanischen Herstellung einer Elektrode für elektrochemische Verfahren, wobei die Elektrode von einem Typ ist, bestehend aus:
   a) einem elektrisch leitenden Träger und
   b) einer elektrokatalytischen Beschichtung aus einem Metall oder einer Metallegierung mit darin dispergierten Partikeln aus einem elektrokatalytischen Material,wobei das elektrokatalytische Material ausgewählt ist unter wenigstens einem Element der Platingruppe als Metall oder Legierungen davon oder Oxiden, Mischoxiden, Boriden, Nitriden, Karbiden oder Sulfiden davon,
   wobei dieses Verfahren darin besteht, die elektrokatalytische Beschichtung auf den elektrisch leitenden Träger galvanisch aufzutragen aus einem galvanischen Nickel-, Kupfer- oder Silber-Beschichtungsbad,das suspendierte Teilchen des elektrokatalytischen Materials enthält, wobei das Galvanisierungsbad weiterhin, in gelöster oder suspendierter Form, 100 bis 2000 ppm wenigstens einer zusätzlichen Thallium-, Blei-, Zinn-, Arsen-, Antimon-, Wismuth-, Kadmium- oder Schwefelverbindung enthält.

2. Verfahren nach Anspruch 1, dadurch gekennzeichnet, daß das elektrokatalytische Material Rutheniumoxid ist.

3. Elektrode zur Verwendung in elektrochemischen Verfahren, erhältlich nach dem Verfahren nach einem der vorhergehenden Ansprüche.

4. Verwendung der Elektrode nach Anspruch 3, als Kathode in einer elektrolytischen Zelle zur Elektrolyse von Alkalimetallhalogeniden.